# FASCICULE DE BREVET EUROPEEN

(11) **EP 3 646 548 B1**
(45) Date de publication et mention de la délivrance du brevet: **24.02.2021**
(21) Numéro de dépôt: 18732380.3
(22) Date de dépôt: 27.06.2018
(51) Int. Cl.: H04L 29/06, H04L 29/14, H04L 29/08

(54) **PROCÉDÉ DE TRANSMISSION D'UN CONTENU AUDIO INTERROMPU DANS UN RÉCEPTEUR HYBRIDE, SYSTÈME, RÉCEPTEUR ET PROGRAMME ASSOCIÉ AU PROCÉDÉ**
VERFAHREN ZUR ÜBERTRAGUNG VON UNTERBROCHENEM AUDIOINHALT IN EINEM HYBRIDEMPFÄNGER, SYSTEM, EMPFÄNGER UND MIT DEM VERFAHREN ASSOZIIERTES PROGRAMM
METHOD FOR TRANSMITTING INTERRUPTED AUDIO CONTENT IN A HYBRID RECEIVER, SYSTEM, RECEIVER, AND PROGRAM ASSOCIATED WITH SAID METHOD

(30) Priorité: 28.06.2017 FR 1755973
(43) Date de publication de la demande: 06.05.2020
(73) Titulaire: TDF, 92120 Montrouge (FR)
(72) Inventeur: VINCENT, David, 35150 Amanlis (FR); FAGUE, Dimitri, 75012 Paris (FR); LEBRAT, François, 75016 Paris (FR)
(74) Mandataire: Vidon Brevets & Stratégie
(86) Numéro de dépôt international: PCT/EP2018/067232
(87) Numéro de publication internationale: WO 2019/002359

(56) Documents cités:
- AU-A1- 2014 274 511
- US-A1- 2008 162 666
- US-A1- 2010 112 935

## Description

### 1. DOMAINE DE L'INVENTION

Le domaine de l'invention est celui de la réception d'un contenu audio ou audiovisuel dans un récepteur hybride capable de recevoir à la fois des contenus d'un réseau de diffusion et d'un réseau bidirectionnel. L'invention concerne plus particulièrement le fait que la reproduction des contenus peut être interrompue et que la partie restante à reproduire est ensuite téléchargée d'un réseau.

### 2. ARRIÈRE-PLAN TECHNOLOGIQUE

Dans le domaine de la diffusion de contenus audio ou audiovisuels, il est connu des récepteurs dits « hybrides » capables de recevoir et de reproduire à la fois des émissions en provenance d'un réseau de diffusion, des contenus transmis à partir d'un site, et des contenus transmis en baladodiffusion ou « podcast » selon la terminologie anglo-saxonne. Ces récepteurs sont dotés d'une interface utilisateur comportant un écran et un clavier, des moyens de réception radio et des moyens d'émission de signaux sonores vers des haut-parleurs. L'utilisateur règle son appareil pour recevoir un contenu diffusé à la radio, ou en provenance d'un site Internet. Certains appareils hybrides peuvent enrichir la réception de contenus audio diffusés par une connexion de type Internet ou « IP », par exemple en améliorant la zone de couverture des contenus diffusés en combinant leurs réceptions traditionnelles par réseau de diffusion selon les normes de diffusion suivantes (liste non limitatives) :
- FM (Fréquence Modulée) ou AM (modulation d'amplitude),
- DAB (acronyme de Digital Audio Broadcasting »), DAB+,
- DMB,
- DRM, DRM+,
- DVB (acronyme de Digital Audio Broadcasting »), DVB-T, DVB-S,
- ...
avec des téléchargements ou « streaming » selon la terminologie anglo-saxonne par réseau IP (Wifi, 3G, 4G).

Si les documents numériques sont de type audio et/ou vidéo, alors ils sont généralement encodés selon le standard MPEG, puis un serveur les reçoit en provenance d'une ou plusieurs sources et planifie la diffusion des documents sous la forme d'une succession de paquets de données numériques (ou « chunk » - cette appellation sera ensuite utilisée dans le reste du document). Les techniques de segmentation sont connues en soi, on peut citer par exemple les algorithmes HLS, DASH ou encore, Smooth Streaming. Chaque chunk dispose d'une structure de données de fichier contenant une charge utile (par exemple, les données audio et/ou vidéo, avec les données synchronisant leur reproduction, par exemple des parqueurs temporels ou « timestamps » en langue anglo-saxonne), une référence, et un identifiant de source (typiquement l'identifiant d'une chaîne de diffusion). La diffusion des documents numériques peut s'effectuer par des réseaux de diffusion de télévision numérique, comme les réseaux TNT, mettant en œuvre la norme DVB-T2 ("Digital Video Broadcasting - Terrestrial" pour "diffusion vidéo numérique terrestre"). La diffusion de paquets de données est spécifiée par des standards de façon à pouvoir être reçu par un grand nombre de récepteurs de tout type.

A tout moment, un événement peut intervenir forçant l'utilisateur à interrompre la reproduction sur son récepteur. Cet événement peut par exemple être le fait que le récepteur est un autoradio embarqué dans un véhicule et qu'à certains endroits, l'appareil quitte une zone de couverture et se retrouve sans pouvoir recevoir le contenu en cours de reproduction. L'événement peut aussi être le fait que l'utilisateur reçoit une communication téléphonique qui va utiliser le même système audio que celui qui reproduit actuellement le contenu audio. Dans un autre contexte, l'utilisateur quitte son domicile, et demande à son système d'interrompre la reproduction jusqu'à ce qu'il revienne. Un des buts de la présente invention est la possibilité de reprendre la reproduction du contenu au moment où il a été interrompu.

Pour cela, un moyen simple de poursuivre la reproduction d'un contenu interrompu est de continuer à le recevoir et à l'enregistrer dans une mémoire du l'appareil de reproduction. Lors de la reprise, l'appareil lit sa mémoire organisée circulairement et reproduit le contenu en différé. Ce système nécessite une mémoire locale de taille suffisante et, de toute façon, ne convient pas pour des événements qui ont empêché de recevoir correctement le contenu. Une autre façon de poursuivre la reproduction d'un contenu consiste à se connecter à un site permettant de télécharger la partie restante. L'appareil télécharge et enregistre le contenu complet et, en utilisant une interface utilisateur, l'utilisateur peut avancer rapidement et ainsi passer par dessus des moments qui ont déjà être reproduits. Cette opération qui permet de retrouver des parties non reproduites de contenus diffusés, est assez lourde car l'utilisateur doit identifier lui-même le contenu qu'il veut télécharger.

Le document AU 2014 274 511, publié le 15 Janvier 2015, enseigne un récepteur de télévision par Internet doté d'un moyen permettant de recevoir un contenu audiovisuel, de stopper sa reproduction et ensuite de recevoir le reste du contenu. Ce document enseigne une méthode précise pour calculer le retard temporel permettant de retrouver le moment précis du contenu au moment de l'interruption.

Il existe donc un réel besoin d'un procédé permettant de récupérer facilement au moins des parties du contenu diffusé sur un flux radio et qui n'ont pas été reproduites au niveau d'un récepteur.

L'invention propose également un procédé technique et une architecture applicable à la mise en œuvre de l'ensemble des cas d'usage de services « Arrêt et Redépart », et utilisable par les constructeurs de récepteurs de contenus et par les éditeurs de contenus diffusés sur un flux radio sous la forme d'un accès à une plateforme de service dédiée et opérée dans le réseau informatique mondial.

### 3. EXPOSÉ DE L'INVENTION

Dans un mode de réalisation particulier de l'invention, il est proposé un procédé de transmission d'un contenu audio et/ou audiovisuel au niveau d'un appareil récepteur. Le procédé comprend au moins les étapes suivantes :
- une étape de réception d'un flux déterminé diffusé sur un réseau et reproduction des contenus transmis par ledit flux au niveau de l'appareil récepteur,
- une étape de détection d'un premier événement extérieur à l'appareil récepteur déclenchant l'interruption de la reproduction du contenu en cours et l'enregistrement du moment de l'interruption,
- une étape ultérieure de détection d'un second événement extérieur déclenchant une étape de transmission de l'appareil récepteur vers un serveur distant du moment datant le premier événement et d'une requête de reprise de reproduction du contenu interrompu,
- une étape de transmission du serveur distant vers l'appareil récepteur d'une information spécifiant les identifiants des paquets de données du contenu au moment de l'interruption,
- une étape de transmission des paquets de données du contenu ainsi identifiés, de réception par le récepteur desdits paquets de données en vue de leur reproduction en différé.

Ainsi, la solution proposée repose sur une approche tout à fait nouvelle et inventive, permettant de déterminer précisément la partie manquante d'un contenu dont la reproduction a commencé et qui a été interrompu, et de demander à un site distant de transmettre cette partie manquante afin de continuer la reproduction en différé.

Selon un mode préféré de réalisation, l'information transmise par le serveur distant vers le récepteur comporte un manifeste identifiant une succession de chunks dont le premier contient les paquets de données du contenu au moment de l'interruption. De cette manière les données d'audio à transmettre du serveur au récepteur son parfaitement mises à jour et identifiées.

Selon un autre mode de réalisation, le manifeste transmis identifie tous les chunks disponibles sur le serveur contenant le contenu audio diffusé entre le moment de l'interruption et le moment présent.

Selon un autre mode de réalisation, le manifeste transmis identifie tous les chunks mémorisés dans le serveur à partir du moment où l'intervalle de temps entre le moment de l'interruption et le moment présent dépasse la durée de tous les chunks mémorisés dans le serveur.

Selon un autre mode de réalisation, l'information transmise par le serveur distant vers le récepteur comporte une adresse de lecture dans un buffer circulaire d'un autre serveur distant, cette adresse correspondant à la première trame audio de la partie restante du contenu non lu, le serveur transmettant par la suite les trames audio de la partie restante du contenu non lue. De cette manière, les données audio de la partie du contenu restant à reproduire sont parfaitement identifiables et peuvent plus facilement être transmises.

Selon un autre mode de réalisation, le procédé comporte une étape de détermination de l'heure courante au moment de la transmission du récepteur vers le serveur distant du moment datant le premier événement et d'une étape de calcul de l'écart temporel entre la dite heure courante reçue et l'heure courante du serveur, les paquets de données du contenu au moment de l'interruption étant datés par l'heure transmise à laquelle est retranchée l'écart calculé. De cette manière, le moment de la reprise est parfaitement synchronisé avec celui de l'interruption, l'utilisateur étant assuré de ne rien manquer et de ne rien entendre deux fois.

Selon un autre mode de réalisation, le procédé comporte une étape de modification de l'interface utilisateur pendant une durée limitée spécifiant que le service d'interruption de la reproduction du contenu et de reprise pour une transmission en différé, n'est pas disponible pendant cette durée limitée. De cette manière, l'utilisateur peut immédiatement voir si le service de reprise est disponible ou non.

Selon un autre aspect de l'invention, il est proposé un récepteur hybride pour la reproduction d'un contenu audio en provenance d'un flux déterminé diffusé sur un premier réseau, ledit récepteur comportant un moyen de réception du flux déterminé diffusé sur ledit premier réseau, un moyen de communication avec un serveur distant et un moyen de reproduction de ce contenu audio en vue d'une reproduction en différé. Le récepteur comporte en outre :
- un premier moyen de détection d'un premier événement extérieur au récepteur déclenchant l'interruption de la reproduction du contenu en cours et l'enregistrement d'au moins le moment de l'interruption fourni par une horloge interne,
- un second moyen de détection d'un second événement extérieur pour la reprise de la réception dudit contenu déclenchant la transmission vers un serveur distant du moment datant le premier événement et d'une requête pour recevoir les paquets de données de contenu diffusé à partir dudit moment, le moyen de communication recevant les paquets de données ainsi identifiés et destinés à être reproduits avec un différé.

Selon un autre aspect de l'invention, il est proposé un système de reproduction d'un contenu audio comportant un récepteur hybride doté d'un moyen de réception dudit contenu audio en provenance d'un flux déterminé diffusé sur un réseau et d'un moyen de reproduction de ce contenu audio en vue d'une reproduction en différé. Le système comporte en outre un premier moyen de détection d'un premier événement extérieur au récepteur déclenchant l'interruption de la reproduction du contenu en cours et l'enregistrement du moment de l'interruption, et un second moyen de détection d'un second événement extérieur déclenchant la transmission du récepteur vers un serveur distant du moment datant le premier événement et d'une requête de reprise de reproduction du contenu interrompu, le système comportant un serveur recevant du récepteur une information spécifiant les identifiants des paquets de données du contenu au moment de l'interruption et émettant vers le récepteur des paquets de données ainsi identifiés destinés à être reproduits avec un différé.

Dans un autre mode de réalisation de l'invention, il est proposé un produit programme d'ordinateur, comprenant des instructions de code de programme pour la mise en œuvre du procédé décrit dans les paragraphes précédents, par l'appareil récepteur, lorsque ledit programme est exécuté sur un ordinateur.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente la structure d'un récepteur, selon un mode de réalisation particulier de l'invention ;
- la figure 2 illustre les principaux composants d'un serveur distant, selon un exemple de réalisation ;
- la figure 3 présente une architecture générale des éléments mis en communication pour fournir un service de reprise en différé de contenus selon un mode préféré de réalisation de l'invention ;
- la figure 4 présente un chronogramme des différentes communications intervenant entre les éléments du système, selon un exemple de réalisation ;
- la figure 5 présente un ordinogramme des étapes permettant de convertir l'heure du récepteur en heure de reprise serveur selon un exemple de réalisation ;

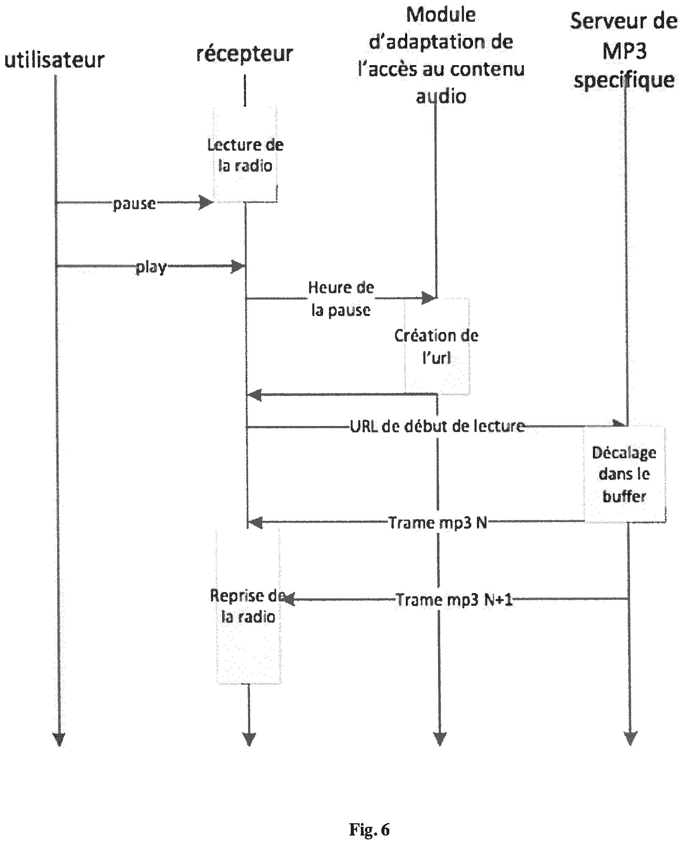

- la figure 6 présente un chronogramme des communications intervenant entre les éléments du système, dans le cas de téléchargements de fichiers de contenu ;
- la figure 7 présente un ordinogramme des étapes permettant de convertir l'heure du récepteur en heure de reprise serveur dans le cas de téléchargements de fichiers de contenus.

### 5. DESCRIPTION DÉTAILLÉE

### 5.1 Principe général

L'invention concerne un procédé de reprise de la reproduction d'un contenu audio et/ou audiovisuel au niveau d'un appareil récepteur. Le procédé commence par une étape de réception du flux déterminé diffusé sur un réseau et reproduction des contenus transmis par ledit flux au niveau de l'appareil récepteur, puis un premier événement extérieur à l'appareil récepteur est détecté qui déclenche l'interruption de la reproduction du contenu en cours et l'enregistrement du moment de l'interruption. Quelques temps après, un second événement extérieur déclenche la transmission de l'appareil récepteur vers un serveur distant du moment datant le premier événement et d'une requête de reprise de reproduction du contenu interrompu. Une information spécifiant les identifiants des paquets de données du contenu au moment de l'interruption est alors transmise du serveur distant vers l'appareil récepteur. Enfin, l'appareil reçoit des paquets de données ainsi identifiés et reproduit le contenu desdits paquets.

Ainsi, la solution proposée repose sur une approche tout à fait nouvelle et inventive, permettant de récupérer facilement d'un serveur distant des parties d'un contenu diffusé qui n'ont pas été reproduites au niveau d'un récepteur.

### 5.2 Description d'un mode particulier de réalisation

Sur toutes les figures du présent document, les éléments (ou les étapes) identiques sont désignées par une même référence numérique.

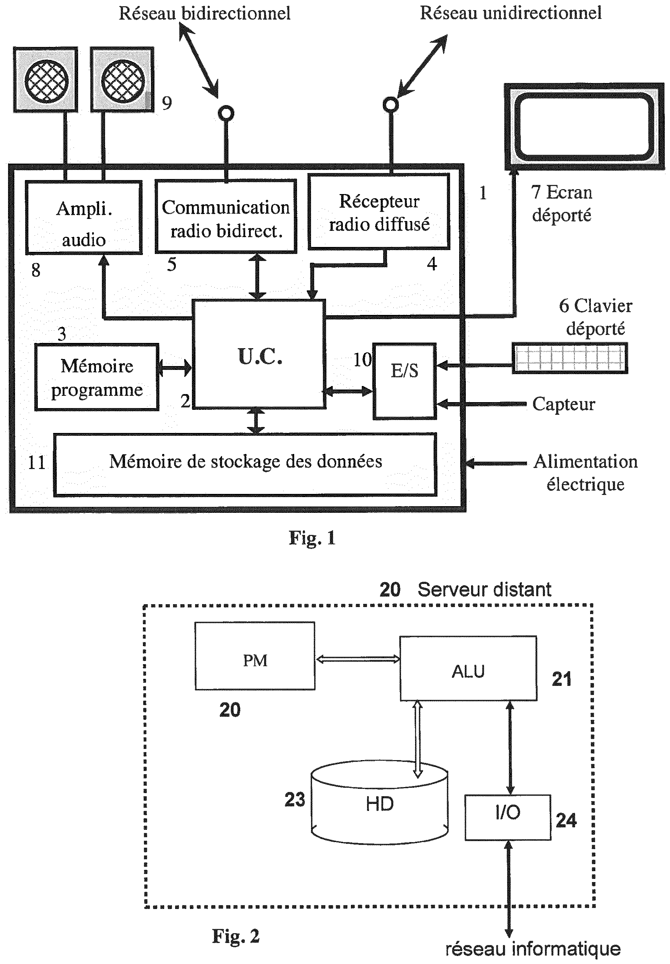

On présente maintenant, en relation avec la **fig. 1****,** une structure d'un appareil récepteur hybride 1, selon un mode de réalisation particulier de l'invention. Le récepteur hybride 1 comporte typiquement une unité centrale 2 associée à une mémoire de programme 3, un module de réception d'un flux radio 4 recevant des émissions d'un réseau monodirectionnel, un réseau FM par exemple, et un module de communication 5 autorisant des communications bidirectionnelles à courte ou à longue portée par un câble ou par la radio, en utilisant par exemple le réseau Bluetooth, Wifi et/ou GSM. Le récepteur dispose également de moyens d'introduction de commande 6 (clavier, boutons, écran tactile, ...), et de moyens d'affichage (écran, voyants lumineux, synthèse vocale, ...). Ces moyens peuvent être intégrés à l'appareil ou déportés. L'appareil dispose également d'un moyen de reproduction d'un contenu audio et/ou audiovisuel, composé par exemple d'un écran déporté 7, et/ou d'un amplificateur 8 intégré à l'appareil émettant des signaux acoustiques vers des haut-parleurs déportés 9. L'appareil dispose de moyens d'entrée/sortie 10 permettant d'émettre et de recevoir des signaux avec tout appareil avec lequel il est connecté. Il peut ainsi recevoir des signaux provenant de capteurs, un microphone par exemple.

Selon un perfectionnement non obligatoire, le récepteur hybride dispose également d'une mémoire 11 capable de stocker un contenu audio et/ou visuel diffusé par un réseau unidirectionnel ou bidirectionnel.

Le récepteur hybride reçoit une alimentation électrique ou dispose de sa propre batterie. Il peut être mobile et prendre l'aspect d'un téléphone portable intelligent (ou « smartphone » selon la terminologie anglo-saxonne. Il peut par exemple être embarqué dans un véhicule itinérant.

La **Fig. 2** illustre les principaux composants d'un serveur distant 20. Selon cet exemple de réalisation, le serveur 20 comporte une unité centrale ALU 21 reliée à une mémoire de programme exécutable PM 22, un disque dur HD 23 contenant une base de données pour le stockage de données de façon non-volatile. Le serveur 6 contient également une interface I/O 24 pour la communication avec le récepteur 1 via un réseau informatique. Le serveur 6 permet la gestion du service de reprise de contenu, le même serveur ou un autre peut transmettre à la demande d'un récepteur 1 les chunks d'un contenu transmis en streaming adaptatif ou des blocs de données au format MP3 d'un contenu à télécharger. Il n'est pas exclu que les moyens de liaison diffèrent selon le type d'appareil en communication, ainsi le serveur 20 peut communiquer avec les récepteurs 1 à travers un réseau sans fil (téléphonie mobile 3G/4G) et/ou par un câble via un réseau numérique quelconque.

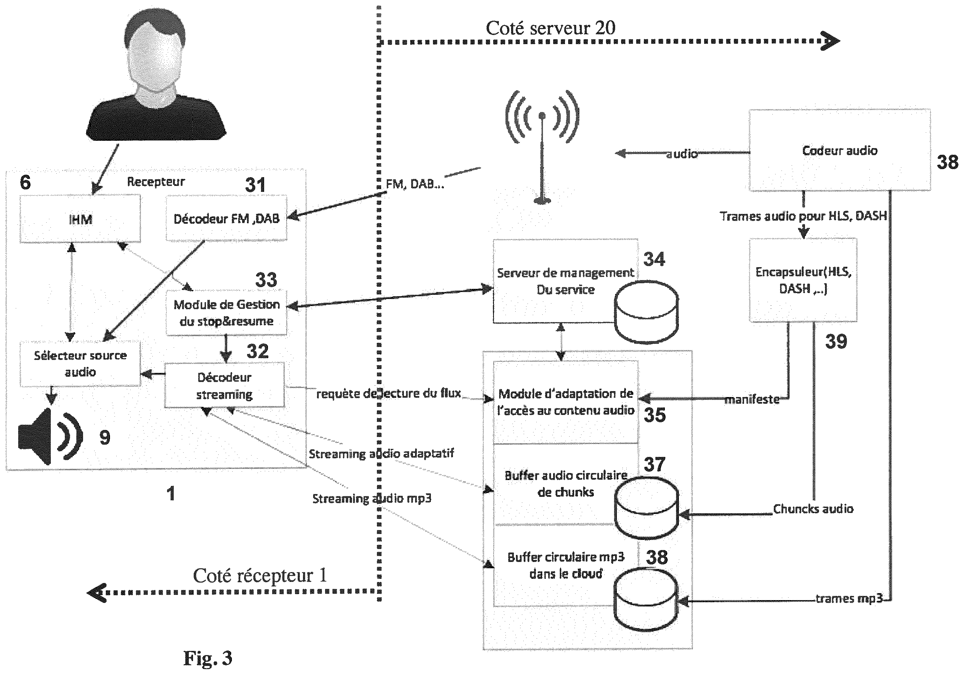

La **fig. 3** présente une architecture générale des éléments mis en communication pour fournir un service dit « Stop and Résumé » ou S&R en abrégé, qui permet de reprendre en différé un contenu. Comme le montre les deux parties séparées par un trait vertical apparaissant sur la figure, ces éléments se trouvent soit dans le récepteur, soit dans les différents serveurs accessibles par le réseau.

Le système S&R permettant la gestion de l'arrêt de la reproduction d'un contenu et de sa reprise en différé s'appuie sur différents appareils et différents modules logiciels. Le système S&R assure les fonctions suivantes :
- Il s'assure de la disponibilité du service S&R pour le contenu interrompu auprès d'un serveur dédié au management de service.
- Il analyse si le service est toujours disponible pour le programme qui était joué lors de la dernière interruption.
- Il informe l'IHM du récepteur de cette disponibilité pour adapter l'affichage afin d'informer l'utilisateur et lui permettre de reprendre le contenu interrompu.
- Sur demande de l'utilisateur, de relancer la reproduction d'un contenu toujours disponible. Pour cela, il demande au module d'adaptation d'accès au service audio l'URL à utiliser pour reprendre la lecture du contenu.
- Il fournit cette URL au décodeur de streaming pour que le récepteur puisse reprendre la lecture du contenu là où il a été interrompu.

Rappelons qu'une « URL » est un acronyme tiré de l'anglais Uniform Resource Locator, littéralement « localisateur uniforme de ressource ».

Le récepteur 1 possède une IHM 6 permettant à son utilisateur de choisir un contenu, de le stopper à tout moment et de demander sa reprise sur sa demande ou automatiquement, dans le cas où la cause de l'interruption est extérieure à l'utilisateur (appel téléphonique, arrêt du récepteur...).

L'IHM 6 affiche la disponibilité ou non du service S&R sous la forme d'une icône présente à l'écran. Cette icône est par exemple représentée par un dessin « STOP » indiquant en cela que le contenu peut être interrompu à tout moment. L'absence de cette icône indique que cette fonction n'est pas disponible, cela peut être dû par exemple à une coupure de communication avec le serveur gérant le service S&R, ou à une mémoire de données saturée ne permettant aucun enregistrement. Lorsque le contenu a été interrompu, le service S&R est alors accessible par une icône qui illustre la « REPRISE », l'absence d'une telle icône signifie aussi que le service n'est plus disponible. Dans le cas où l'accès au service s'effectue par une touche mécanique, l'indicateur d'accessibilité du service peut être représenté par un voyant à coté de cette touche.

Le récepteur possède également les modules logiciels suivants :
- Module de sélection de source audio 30 : il reçoit les sources audio disponible sur le récepteur et sélectionne le contenu audio à reproduire. Ce module est piloté par l'utilisateur via l'IHM.
- Module de décodage FM, DAB 31 : il décode le service sélectionné en réception FM et/ou DAB et fournit en sortie les échantillons audio décodé au Module de sélection de la source audio.
- Décodeur de streaming 32 : il se connecte au serveur de streaming via une adresse URL fournie par le serveur du service S&R, décode les données audio et/ou vidéo et les fournit au module de sélection de source audio. Ce module peut être compatible avec un ou plusieurs protocoles de streaming comme DASH, HLS ou streaming mp3.
- Module de gestion S&R 33 : il reçoit les ordres de l'utilisateur introduites dans l'IHM et commande le décodeur de streaming.

Coté réseau, le services S&R s'appuie sur les différents serveurs suivants, qui peuvent être hébergés sur la même matériel informatique :
- Serveur de management du service 34 : il informe les terminaux de la disponibilité du service S&R. Le récepteur 1 émet une requête en fournissant l'ID du programme en cours d'écoute. Le Serveur lui retourne les données suivantes :
   ∘ la profondeur, en secondes, du buffer circulaire disponible du coté serveur pour le service considéré,
   ∘ la liste des protocoles de streaming disponibles pour reprendre la lecture du contenu,
   ∘ l'adresse URL du module d'adaptation de l'accès au contenu.
- Module d'adaptation de l'accès au contenu 35 : il construit l'adresse de l'URL qui est transmise au récepteur 1 pour reprendre la lecture du contenu. Pour cela, il attend les éléments suivants dans la requête du récepteur :
   ∘ le protocole de streaming demandé par le récepteur : streaming mp3, HLS, DASH...
   ∘ l'heure courante du récepteur lors de l'envoi de la requête : cette heure est utilisée pour calculer le décalage d'heure entre le serveur et le récepteur,
   ∘ l'heure à laquelle la lecture doit être reprise.
   ∘ l'identification de la source transmettant le contenu pour laquelle la lecture doit être reprise.

Si par exemple, le récepteur demande une URL de streaming MP3 : le serveur retourne une URL contenant un identifiant de la position où doit être démarrer le streaming. Cet identifiant peut être l'heure serveur à laquelle reprendre la lecture.

Si par exemple, le récepteur demande une URL de streaming adaptatif (HLS, DASH...): Le serveur calcule dynamiquement et retourne alors au lecteur, par exemple, un MPD (pour DASH) ou d'un m3u (pour HLS) qui est propre au récepteur qui a fait la requête. Ce fichier contient, comme première référence, la référence de la première trame à jouer pour reprendre le contenu audio à la position demandée. Le récepteur vient cycliquement lire le fichier, le serveur le met alors dynamiquement à jour afin assurer le téléchargement des chuncks suivants par le récepteur.
- Buffer audio circulaire mp3 dans le cloud 36 : l'URL utilisée par le lecteur, coté récepteur, contient un identifiant de la position où doit être démarrer le streaming. Cet identifiant peut être l'heure serveur à laquelle reprendre la lecture. Cet identifiant est interprété par le serveur qui se positionne dans la liste des trames qu'il contient dans son buffer circulaire. Si l'identifiant est l'heure serveur le serveur utilise l'heure de la dernière trame ajouter au buffer pour calculer le décalage à effectuer pour se positionnée sur la bonne trame pour démarrer le streaming. Le streaming et ensuite vue par le récepteur comme un streaming live et se poursuis jusqu'à ce que l'utilisateur choisis de sortir du mode résume.
- Buffer audio circulaire de chunks 37 (DASH, HLS...) : les chuncks sont mis à disposition des récepteurs sur un serveur http sous la forme de fichiers. Chaque chunck n'est présent qu'une fois sur le serveur et est partagé par tous les récepteurs. Le serveur efface progressivement les chuncks qui sortent de la plage horaire couverte par la fonction résume afin de ne pas saturer l'espace de stockage.
- Codeur audio 38 : il crée les trames audio mp3 ou AAC en utilisant la même source audio que celle diffusée en DAB et FM, si le contenu est de type audio.
- Encapsuleur 39 : Dans le cas du streaming adaptatif pour un contenu audio, les trames sont ensuite encapsulées sous forme de chuncks et déposées sur un serveur.

L'invention peut s'utiliser dans au moins deux systèmes de transmission de contenus, le premier concerne des documents transmis en streaming adaptatif selon des standards comme DASH (acronyme de l'Anglo-saxon Dynamic Adaptive Streaming over http), ou HLS (acronyme de l'Anglo-saxon HTTP Live Streaming), le second concerne des documents téléchargés selon un standard MP3 par exemple. Ces standards ont été développés par de grandes sociétés américaines d'informatique.

De façon générale, les protocoles de streaming adaptatif cités ci-dessus sont massivement utilisés de nos jours, et il n'y a pas lieu de les expliciter davantage dans ce document. Le streaming adaptatif permet de transmettre un ou plusieurs fichiers de descriptions (appelés « manifeste » dans certain standard) et un ensemble de fichiers contenant le contenu à diffuser (ou un fichier dans le cas du MP3).

L'invention va maintenant être expliquée dans ces échanges de communications, pour l'un et l'autre des systèmes.

### 5.3 Mode particulier de réalisation dans le cadre du streaming adaptatif

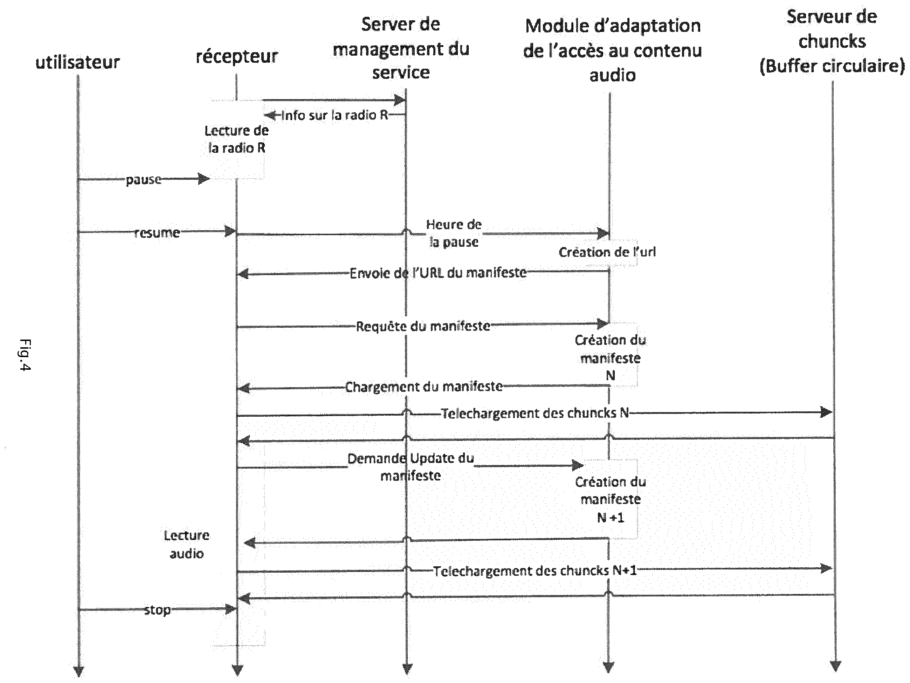

La **Fig. 4** illustre sous la forme d'un chronogramme ou le temps évolue de haut en bas, des différentes communications intervenant entre :
- l'utilisateur et son récepteur,
- le serveur de gestion du service S&R,
- le serveur d'adaptation de l'accès au contenu audio,
- le serveur fournissant le contenu (c'est à dire fournissant des chunks).

Cette figure est illustrative d'une reprise de la reproduction d'un contenu audio, mais l'invention concerne aussi des contenus ayant une composante vidéo. Dans un premier temps, l'utilisateur lance la reproduction d'un contenu transmis par un flux radio à partir de son récepteur 1. Un événement intervient qui interrompt la reproduction. Cet événement est par exemple, une intervention de l'utilisateur pour stopper la reproduction, la prise d'un appel téléphonique qui va utiliser le système audio 8, 9 du récepteur, la détection d'un défaut d'alimentation entraînant l'arrêt immédiat du récepteur, ... Au moment de l'interruption, le récepteur 1 mémorise dans une mémoire non volatile le moment précis de l'interruption. Un peu plus tard, l'utilisateur introduit une nouvelle commande « Résumé » pour reprendre la reproduction, le récepteur transmet alors une requête contenant le moment précis de l'interruption de ce contenu au serveur d'adaptation de l'accès au contenu audio. Le serveur renvoie alors une URL permettant au récepteur de recevoir un manifeste. Un manifeste est un fichier décrivant l'ensemble des contenus disponibles selon un certain standard, DASH par exemple, et notamment la façon de trouver les flux qui fournissent ces contenus. Le récepteur transmet alors une requête pour recevoir ce manifeste, et le serveur d'adaptation de l'accès au contenu audio lui transmet. Ce manifeste contient les références des chunks de la partie restant à reproduire du contenu. Le récepteur transmet alors ces références au serveur fournissant le contenu, qui renvoie les chunks contenant les données à reproduire. Le récepteur peut alors commencer la reprise de la reproduction du contenu interrompu. L'implémentation dans le cas d'un streaming adaptatif prend en compte le fait que les chunks sont des entités indépendantes et qu'il suffit de les demander pour les recevoir.

Le récepteur effectue régulièrement des mises à jour du manifeste auprès du serveur d'adaptation de l'accès au contenu audio, de façon à recevoir les chunks qui suivent la partie du contenu actuellement en cours de reproduction. Selon un mode particulier de réalisation, le récepteur demande une nouvelle version du manifeste lorsque la durée de reproduction dont il dispose est en dessous d'un seuil, une minute par exemple.

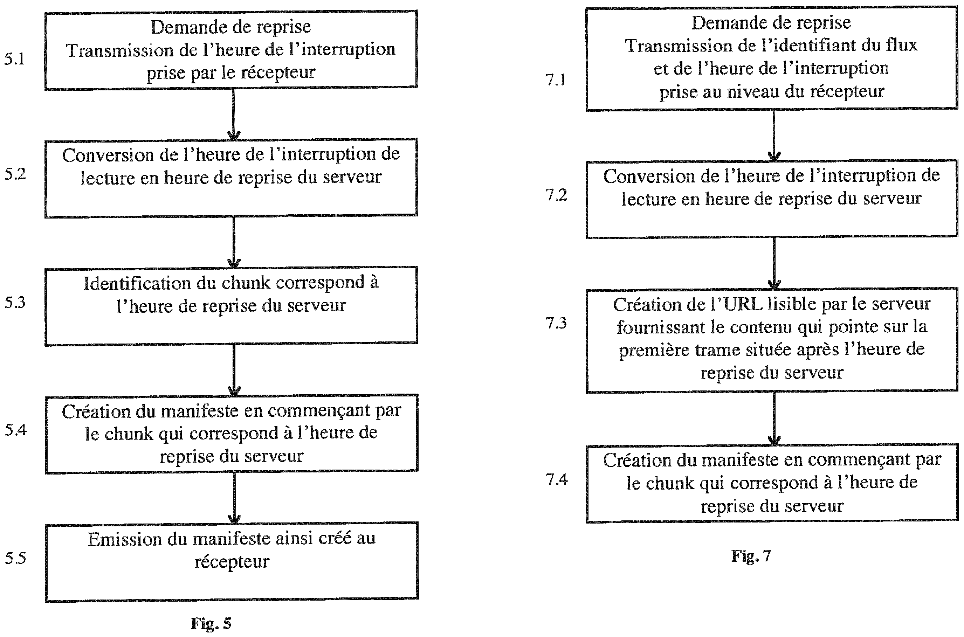

Selon un autre aspect de l'invention, chaque récepteur dispose de son propre moyen pour horodater l'heure de l'interruption, et de ce fait cette heure peut changer d'un récepteur à l'autre. Il importe donc pour le serveur de déterminer avec précision le moment où l'interruption est réellement intervenue sur chaque récepteur, pour que la lecture démarre au bon endroit. La **Fig. 5** présente un ordinogramme des étapes permettant de convertir l'heure du récepteur en heure de reprise serveur selon un exemple de réalisation. A l'étape 5.1, le récepteur reçoit de l'utilisateur une demande de reprise, et transmet au serveur d'adaptation de l'accès au contenu audio l'heure de l'interruption prise par le récepteur. Le serveur calcule alors l'écart entre l'heure courante du récepteur et l'heure courante du serveur, et en appliquant cet écart, il convertit l'heure du récepteur en une heure de reprise serveur (étape 5.2). Supposons par exemple que l'heure du récepteur est 2h02 alors qu'au même moment, l'heure du serveur est 2h00. Au moment où le récepteur envoie sa requête, il transmet son heure courante : 2h02 au serveur. Le serveur prend son heure courante et calcule l'écart : + 2 mn, l'horloge du récepteur avance donc de 2 minutes. Supposons par la suite que le récepteur veut reprendre la reproduction d'un contenu qu'il a interrompu à 11h00 (pour lui). Alors le serveur retranche 2 mn et à l'étape 5.3, identifie le chunk qui correspond à l'heure de reprise du serveur. Le serveur d'adaptation de l'accès au contenu crée ensuite un manifeste dont le premier chunk correspond à l'heure de reprise du serveur (étape 5.4). A l'étape 5.5, ce manifeste est transmis au récepteur. Ainsi, le serveur d'adaptation fournit la première URL de MPD/playlist au récepteur afin qu'il puisse démarrer la lecture. Cette URL possède une structure particulière. La première partie comporte le chemin pour que les requêtes de mise à jour du manifeste arrivent au module d'adaptation. La seconde contient l'identifiant de la radio à rejouer et l'heure serveur de début de lecture dans le buffer. Cette heure peut être mise dans le nom du manifeste ou dans le chemin permettant d'y accéder. Cette structure permet de traiter les demandes de mise à jour du manifeste sans à avoir à maintenir une session entre le récepteur et un module de d'adaptation en particulier. Cela facilite la scalabilté de la plateforme et la gestion du load balancing.

La seconde partie correspond à la lecture du flux, elle peut se résumer en une boucle consistant en ce que le récepteur demande un nouveau manifeste et en ce que serveur d'adaptation de l'accès au contenu audio crée ces nouveaux manifestes en ajoutant les nouveaux chunks disponibles et en supprimant ceux effacés dans la mémoire. De cette façon, le serveur met à jour le contenu de chaque manifeste en fonction des chuncks disponible. Par exemple si le récepteur demande à reprendre 10 minutes après l'interruption de la reproduction, le prochain manifeste contiendra la liste des chuncks correspondants à ces 10 minutes. Supposons que le récepteur demande un manifeste toutes les 20 secondes par exemple, lors de la seconde demande le manifeste transmis par le serveur contient les références pour lire 10 minutes 20 secondes. Puis à la troisième demande il contient les références pour 10 minutes et 40 secondes, etc...

Il est à noter que le serveur d'adaptation possède une implémentation différente pour chaque type de streaming adaptatif : DASH, HLS, HSS... Le serveur génère dynamiquement les manifestes afin de rester compatible avec les spécifications du chaque protocole.

### 5.4 Mode particulier de réalisation dans le cadre de téléchargement

La **Fig. 4** illustre sous la forme d'un chronogramme ou le temps évolue de haut en bas, des différentes communications intervenant entre :
- l'utilisateur et son récepteur,
- le serveur de gestion du service S&R,
- le serveur fournissant le contenu sous la forme de fichiers MP3 par exemple.

A la différence du système fournissant des chunks, ce qui nécessite la création de manifestes, les fichiers sont directement identifiables sans passer par un manifeste. Le ou les fichiers composant le contenu sont alors gérés circulairement par un pointeur de lecture et un pointeur d'écriture. A noter qu'un contenu MP3 est géré sous forme d'un buffer en mémoire qui est vu comme un seul fichier/flux par le récepteur. Dans ce cas, le serveur peut associer chaque trame transmise à une heure d'émission et, lorsqu'on lui demande de transmettre des trames à partir d'une certaine heure, il peut déterminer de quelles trames il s'agit. Le récepteur 1 reçoit un ensemble de trames et se synchronise sur la trame dont la reproduction a été interrompue, ou sur la trame entière qui suit le moment de l'interruption.

Dans un premier temps, l'utilisateur lance la reproduction d'un contenu transmis par un flux radio à partir de son récepteur 1. Un événement intervient qui interrompt la reproduction et qui déclenche dans le récepteur, la mémorisation du moment précis de l'interruption. Un peu plus tard, l'utilisateur introduit une nouvelle commande « Play » pour reprendre la reproduction, le récepteur transmet alors une requête contenant le moment précis de l'interruption de ce contenu au serveur d'adaptation de l'accès au contenu audio. Le serveur calcule alors l'URL permettant de pointer dans le buffer circulaire la trame de données du contenu qui suit le moment de l'interruption, et émet cette URL vers le récepteur. Ce dernier demande alors au serveur fournissant le contenu de lui renvoyer la trame identifiée par l'URL transmise (par exemple MP3). Le serveur transmet la trame au récepteur et décale le pointeur de lecture.

Après avoir reçu les premiers fichiers, ceux-ci sont décodés et leurs contenus audio et/ou visuels sont reproduits au niveau du récepteur. Le récepteur effectue régulièrement des requêtes pour télécharger les fichiers suivants, de façon à poursuivre continuellement la reproduction. Une nouvelle requête est transmise au serveur fournissant le contenu lorsque la durée des fichiers reçus mais non encore reproduits est en dessous d'un seuil, une minute par exemple.

Selon une variante de réalisation, les manifestes transmis décrivent les fichiers du contenu diffusé entre le moment de la reprise jusqu'au moment présent, dans la limite des fichiers disponibles dans la mémoire circulaire coté serveur. Cette variante permet à l'utilisateur du récepteur d'avancer et de reculer rapidement dans la reproduction du contenu audio et notamment de revenir à la reproduction du contenu actuellement diffusé.

Selon cette variante, au moment de la reprise de la reproduction, le premier manifeste décrit la liste de tous les fichiers disponibles à partir du moment de l'interruption et jusqu'au moment présent. Dans un second temps, les autres manifestes décrivent les fichiers dont le contenu audio a été diffusé au moment de la reprise jusqu'au moment présent, jusqu'à atteindre la taille maximale de la mémoire circulaire du serveur. De cette manière, l'utilisateur peut naviguer dans le contenu audio qui a été diffusé lors de la reprise de la reproduction et jusqu'au moment présent.

Dans un troisième temps, lorsque le manifeste décrit l'ensemble des fichiers disponibles au niveau du serveur, il est nécessaire d'avancer dans le temps le premier fichier décrit par le manifeste. Il n'est alors plus possible de revenir au moment de la reprise car les fichiers associés ne sont plus disponibles dans la mémoire du serveur. Les manifestes décrivent alors une fenêtre temporelle qui correspond à la taille du buffer circulaire. Cela implique que l'heure la plus ancienne pour la reproduction indiquée dans la demande de manifeste devienne l'heure la plus ancienne dans le buffer circulaire, et plus celle de la reproduction en différé coté récepteur. Ceci explique pourquoi le récepteur doit connaître la durée de mémorisation du serveur.

Prenons un exemple, la mémoire circulaire possède une capacité de stockage correspondant à 2 heures de reproduction de contenus, et l'utilisateur demande une reprise 1h30 heures après l'interruption. Pendant les premières 30 minutes qui suivent la reprise, l'utilisateur peut naviguer dans la reproduction du contenu et peut la reprendre jusqu'au moment de la reprise. Ensuite, l'utilisateur navigue dans le contenu diffusé au cours des deux heures précédant le moment présent.

La **Fig. 7** présente un ordinogramme des étapes permettant de convertir l'heure du récepteur en heure de reprise serveur selon un exemple de réalisation. A l'étape 7.1, le récepteur reçoit de l'utilisateur une demande de reprise, et transmet au serveur d'adaptation de l'accès au contenu audio l'heure de l'interruption prise au niveau du récepteur (avec son horloge par exemple). Le serveur calcule alors l'écart entre l'heure courante du récepteur et l'heure courante du serveur, et en appliquant cet écart, il convertit l'heure du récepteur en une heure de reprise serveur (étape 7.2). De même que précédemment, le serveur retranche l'écart mesuré à l'heure transmise par le récepteur. Le serveur d'adaptation de l'accès au contenu crée ensuite une URL qui pointe sur un premier fichier contenant les données audio et/ou vidéo correspond à l'heure de reprise du serveur (étape 7.3), et transmet cette URL au récepteur. A l'étape 7.4, le récepteur émet l'URL vers le serveur de contenu afin de télécharger les fichiers dont les données sont à reproduire.

De cette manière, les premières trames du contenu qui sont transmises sont bien celles qui correspondent à la partie restante à reproduire.

Les contenus transmis par un canal FM ne comporte pas d'indications temporelles. Certains flux transmettent ce type de données. Selon un perfectionnement et dans ce cas, par exemple selon le standard MPEG TS on utilise une horloge interne. Le module S&R enregistré dans récepteur prend alors en compte les valeurs d'horloge transmise et détermine les valeurs et le serveur web a accès aux valeurs de l'horloge utilisée lors de la diffusion.

De cette façon, le récepteur peut calculer son propre décalage temporel par rapport à l'horloge du réseau de diffusion. Ce décalage est constant dans le temps, de sorte que le récepteur peut, lors d'une interruption suivi d'une reprise, le transmettre pour recevoir les bons fichiers.

Selon un perfectionnement, le récepteur reçoit une indication sur la durée de reproduction du contenu enregistré dans la mémoire gérée circulairement. Dans ce cas, le récepteur peut soustraire la taille de la mémoire à son heure courante pour déterminer la position du pointeur. Si l'heure résultat est antérieure à l'heure de l'arrêt de l'écoute alors il est possible de proposer la fonction S&R à l'utilisateur, sinon ce n'est pas possible. Cette analyse doit être réalisée cycliquement toutes les 1 secondes par exemple, afin d'arrêter de proposer cette fonction à l'utilisateur dès que l'heure de reprise sort de la plage de temps couverte par la mémoire circulaire.

La reprise de la lecture à partir de la mémoire circulaire peut prendre un peu de temps. Ce délai est variable est fortement dépendant du débit réseau disponible pour le récepteur. Il y a donc un risque, pour l'utilisateur, de demander la reprise de lecture et que le contenu ne soit plus disponible au moment où le serveur de streaming reçoit la requête. Afin d'éviter ce disfonctionnement et selon un autre perfectionnement, le récepteur peut supprimer l'accès à la fonction S&R, une minute par exemple, avant la fin réelle de disponibilité du service.

### 5.5 Mode particulier de réalisation dans le cas d'un contenu segmenté

Ce mode de réalisation concerne le fait que le contenu est segmenté ayant une unité sémantique. C'est le cas par exemple de la structure de la diffusion des stations de de radio ou des chaînes de télévision qui est organisée selon des grilles de programmes. Chaque élément de la grille de programmes correspond à une émission qui est renseignée par un titre, une date et des horaires prévisionnels de début et de fin de diffusion. Chaque émission correspond à un segment et la comparaison de l'horaire de lecture du récepteur avec les informations de repérage horaire des émissions permet d'identifier le segment qui est en cours d'écoute et de proposer à l'auditeur de déplacer la position de lecture sur le flux de streaming au début du segment localisé pour reprendre l'écoute au début de l'émission en cours. Pour ce mode de réalisation les informations de repérage des émissions et de leurs horaires sont obtenues à partir des informations de prévisions de programmes publiées par les éditeurs de programmes radio ou télévision, soit sur leur sites internet, soit sur des serveurs à usage professionnel renseignés avec des informations plus précises.

C'est aussi le cas par exemple d'une émission radio entrecoupée par des séquences publicitaires, par exemple une émission culturelle au cours de laquelle des questions sont posées et des réponses sont apportées et commentées. Le diffuseur prend soin d'incorporer une séquence publicitaire à la fin des réponses à une question et juste avant l'énoncé de la question suivante. Chaque segment comporte bien une unité sémantique consiste à y agglomérer au moins une question posée et les réponses associées. Un autre exemple consiste dans un journal radio composé de plusieurs reportages, chaque reportage traitant un sujet particulier constitue en soi un segment dudit journal.

Selon un mode préféré de réalisation, le diffuseur du contenu détermine le début de chaque segment d'un même contenu, ce marquage peut être fait par un opérateur. Selon une variante de réalisation, le récepteur dispose de moyen d'analyse du contenu pour effectuer la segmentation. Selon cette variante, le récepteur retrouve les séquences publicitaires en utilisant la présence de jingle publicitaires marquant le début et la fin de la séquence, ou l'augmentation du niveau sonore signalant très généralement la présence d'une séquence publicitaire.

Dans le contexte de la diffusion d'un contenu segmenté, lorsque le second événement intervient (étape ,7.1), le récepteur donne à l'utilisateur le choix d'introduire l'une ou l'autre des commandes suivantes :
- reprise du contenu au moment précis de l'interruption,
- reprise du contenu au début du segment dont la reproduction a été interrompue.

Ce second choix permet à un utilisateur de revenir en arrière et de réécouter le début du segment pour mieux se remémorer le moment de l'interruption.

Le choix se présente de préférence sous la forme de boutons distincts à appuyer sur le clavier du récepteur, ou de deux icônes distinctes dans le cas d'un écran tactile. Si l'utilisateur demande à reprendre la reproduction du contenu au moment précis de l'interruption, alors on se retrouve dans le cas décrit précédemment dans le présent document. Par exemple, le récepteur recherche dans sa mémoire non volatile le moment précis de l'interruption et demande à un serveur distant de renvoyer un manifeste en utilisant ce moment.

Dans le cas où l'utilisateur demande à reprendre le contenu au début du segment dont la reproduction a été interrompue, alors le récepteur recherche le début du segment. Dans ce cas, le récepteur va reproduire le contenu Selon un mode préféré de réalisation, le récepteur demande au serveur distant de lui renvoyer un manifeste qui contient les références des chunks du segment à reproduire qui contient le moment de l'interruption. Par exemple, si chaque segment d'une émission d'une heure, dure 10 minutes et que le moment de l'interruption est intervenu 15 minutes à compter du début, le serveur distant renvoie au récepteur un manifeste qui contient les références des chunks du second segment, c'est à dire celui qui commence 10 minutes après le début de cette émission.

Selon la variante où le récepteur dispose de moyens permettant de retrouver le début de chaque segment, celui-ci transmet au serveur le moment du début du segment interrompu. Le serveur transmet alors en réponse un manifeste qui contient les références des chunks se situant au début de ce segment.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de transmission d'un contenu audio interrompu dans un récepteur hybride en vue d'une reproduction en différé, le procédé comprenant au moins les étapes suivantes :
- une étape de réception d'un flux déterminé diffusé sur un réseau et reproduction des contenus transmis par ledit flux au niveau du récepteur,
- une étape de détection d'un premier événement extérieur au récepteur déclenchant l'interruption de la reproduction du contenu en cours et l'enregistrement du moment de l'interruption,
- une étape ultérieure de détection d'un second événement extérieur déclenchant une étape de transmission du récepteur vers un serveur distant de gestion du service de reprise de contenu, du moment de l'interruption
et d'une requête de reprise de reproduction du contenu interrompu,
- une étape de transmission du serveur distant vers le récepteur d'une information spécifiant les identifiants des paquets de données du contenu au moment de l'interruption, ladite information comportant un manifeste identifiant une succession de paquets de données dont ceux du contenu audio diffusés entre le moment de l'interruption et le moment présent,
- une étape de transmission des paquets de données du contenu ainsi identifiés, et réception par le récepteur desdits paquets de données en vue de leur reproduction en différé.

2. Procédé de reprise d'un contenu audio selon la revendication **1, caractérisé en ce que** le manifeste transmis identifie tous les chunks mémorisés dans le serveur à partir du moment où l'intervalle de temps entre le moment de l'interruption et le moment présent dépasse la durée de tous les chunks mémorisés dans le serveur.

3. Procédé de reprise d'un contenu audio selon la revendication **1, caractérisé en ce que** l'information transmise par le serveur distant vers le récepteur comporte une adresse de lecture dans un buffer circulaire d'un autre serveur distant, cette adresse correspondant à la première trame audio de la partie restante du contenu non lu, le serveur transmettant par la suite les trames audio de la partie restante du contenu non lue.

4. Procédé de reprise d'un contenu audio selon l'une quelconque des revendications précédentes, **caractérisé en ce que** ledit contenu audio est divisé en une pluralité de segment présentant chacun une unité sémantique et **en ce que** la détection du second événement déclenche une étape de détermination du moment du début du segment dont la reproduction a été interrompue par le premier événement lors de la diffusion du contenu, le serveur distant transmettant au récepteur un manifeste identifiant une succession de paquets de données dont ceux du début du segment interrompu.

5. Procédé de reprise d'un contenu audio selon la revendication 6, **caractérisé en ce que** l'étape de détermination du moment du début du segment dont la reproduction a été interrompue par le premier événement s'effectue au niveau du serveur distant.

6. Procédé de reprise d'un contenu audio selon la revendication 6, **caractérisé en ce que** l'étape de détermination du moment du début du segment dont la reproduction a été interrompue par le premier événement s'effectue au niveau du récepteur qui transmet ce moment au serveur distant.

7. Procédé de reprise d'un contenu audio selon l'une quelconque des revendications 4 à 6, **caractérisé en ce que** la détection d'un second événement extérieur déclenche une une étape proposant à l'utilisateur de choisir entre une reprise du contenu au moment précis de l'interruption lors de la diffusion du contenu, ou au début du segment dont la reproduction a été interrompue.

8. Procédé de reprise d'un contenu audio selon l'une quelconque des revendications précédentes, **caractérisé en ce qu'**il comporte une étape de détermination de l'heure courante au moment de la transmission du récepteur vers le serveur distant du moment datant le premier événement et d'une étape de calcul de l'écart temporel entre la dite heure courante reçue et l'heure courante du serveur, les paquets de données du contenu au moment de l'interruption étant datés par l'heure transmise à laquelle est retranchée l'écart calculé.

9. Procédé de reprise d'un contenu audio selon l'une quelconque des revendications précédentes, **caractérisé en ce qu'**il comporte une étape de modification de l'interface utilisateur pendant une durée limitée spécifiant que le service d'interruption de la reproduction du contenu et de reprise pour une transmission en différé, n'est pas disponible pendant cette durée limitée.

10. Procédé de reprise d'un contenu audio selon l'une quelconque des revendications précédentes, **caractérisé en ce que** le contenu audio interrompu puis repris en différé est reçu au niveau du récepteur hybride dans un format selon l'un des standards de la liste suivante : MPEG, HLS, ou DASH.

11. Procédé de reprise d'un contenu audio selon l'une quelconque des revendications précédentes, **caractérisé en ce que** le contenu audio est lu au niveau du serveur à partir d'une mémoire gérée circulairement.

12. Récepteur hybride pour la reproduction d'un contenu audio en provenance d'un flux déterminé diffusé sur un premier réseau, ledit récepteur comportant un moyen de réception (4) du flux déterminé diffusé sur ledit premier réseau, un moyen de communication (5) avec un serveur distant et un moyen de reproduction (8, 9) de ce contenu audio en vue d'une reproduction en différé, ledit récepteur étant **caractérisé en ce qu'**il comporte en outre :
- un premier moyen de détection d'un premier événement extérieur au récepteur déclenchant l'interruption de la reproduction du contenu en cours et l'enregistrement d'au moins le moment de l'interruption fourni par une horloge interne,
- un second moyen de détection d'un second événement extérieur pour la reprise de la réception dudit contenu déclenchant la transmission vers un serveur distant de gestion du service de reprise de contenu, du moment datant le premier événement et d'une requête pour recevoir les paquets de données de contenu diffusé à partir dudit moment, le moyen de communication (5) recevant dudit serveur distant une information comportant un manifeste identifiant une succession de paquets de données dont ceux du contenu audio diffusés entre le moment de l'interruption et le moment présent, les paquets de données ainsi identifiés étant destinés à être reçus et reproduits avec un différé.

13. Système de reproduction d'un contenu audio comportant un récepteur hybride doté d'un moyen de réception dudit contenu audio en provenance d'un flux déterminé diffusé sur un réseau et d'un moyen de reproduction de ce contenu audio en vue d'une reproduction en différé,
**caractérisé en ce qu'**il comporte un premier moyen de détection d'un premier événement extérieur au récepteur déclenchant l'interruption de la reproduction du contenu en cours et l'enregistrement du moment de l'interruption, et un second moyen de détection d'un second événement extérieur déclenchant la transmission du récepteur vers un serveur distant de gestion du service de reprise de contenu, du moment datant le premier événement et d'une requête de reprise de reproduction du contenu interrompu, le système comportant un serveur recevant du récepteur une information spécifiant les identifiants des paquets de données du contenu au moment de l'interruption et émettant vers le récepteur une information comportant un manifeste identifiant une succession de paquets de données dont ceux du contenu audio diffusés entre le moment de l'interruption et le moment présent, les paquets de données ainsi identifiés étant destinés à être reçus et reproduits avec un différé.

14. Produit programme d'ordinateur, comprenant des instructions de code de programme pour la mise en œuvre du procédé selon au moins une des revendications 1 à 10, lorsque ledit programme est exécuté sur un ordinateur.

## Patentansprüche

1. Verfahren zur Übertragung von unterbrochenem Audioinhalt in einem Hybridempfänger zur zeitversetzen Wiedergabe, wobei das Verfahren mindestens die folgenden Schritte umfasst:
- einen Schritt des Empfangens eines bestimmten Flusses, der auf einem Netz verteilt wird, und des Wiedergebens der von dem Fluss übertragenen Inhalte auf der Ebene des Empfängers,
- einen Schritt des Detektierens eines ersten Ereignisses extern von dem Empfänger, das die Unterbrechung der Wiedergabe des laufenden Inhalts und die Aufzeichnung des Unterbrechungsmoments auslöst,
- einen folgenden Schritt des Detektierens eines zweiten externen Ereignisses, das einen Schritt des Übertragens von dem Empfänger an einen entfernten Server zur Verwaltung des Diensts der Wiederaufnahme des Inhalts, des Unterbrechungsmoments und einer Anforderung zur Wiederaufnahme der Wiedergabe des unterbrochenen Inhalts auslöst,
- einen Schritt des Übertragens, von dem entfernten Server an den Empfänger, einer Information, welche die Identifikatoren von Datenpaketen des Inhalts im Unterbrechungsmoment spezifiziert, wobei die genannte Information eine Liste umfasst, die eine Folge von Datenpaketen identifiziert, darunter jene des Audioinhalts, die zwischen dem Unterbrechungsmoment und dem aktuellen Moment verteilt werden,
- einen Schritt des Übertragens der Datenpakete des so identifizierten Inhalts, und des Empfangens der genannten Datenpakete durch den Empfänger zu ihrer zeitversetzten Wiedergabe.

2. Verfahren zur Wiederaufnahme von Audioinhalt nach Anspruch 1, **dadurch gekennzeichnet, dass** die übertragene Liste alle Stücke identifiziert, die in dem Server ab dem Moment gespeichert werden, wo das Zeitintervall zwischen dem Unterbrechungsmoment und dem aktuellen Moment über die Dauer aller in dem Server gespeicherten Stücke hinausgeht.

3. Verfahren zur Wiederaufnahme von Audioinhalt nach Anspruch 1, **dadurch gekennzeichnet, dass** die Information, die von dem entfernten Server an den Empfänger übertragen wird, eine Leseadresse in einem Ringpuffer eines anderen entfernten Servers umfasst, wobei diese Adresse dem ersten Audiorahmen des verbleibenden Teils des nicht gelesenen Inhalts entspricht, wobei der Server anschließend die Audiorahmen des verbleibenden Teils des nicht gelesenen Inhalts überträgt.

4. Verfahren zur Wiederaufnahme von Audioinhalt nach einem der vorhergehenden Ansprüche, **dadurch gekennzeichnet, dass** der genannte Audioinhalt in eine Vielzahl von Segmenten geteilt wird, die jeweils eine semantische Einheit aufweisen, und dadurch, dass die Detektion des zweiten Ereignisses einen Schritt des Bestimmens des Anfangsmoments des Segments auslöst, dessen Wiedergabe von dem ersten Ereignis bei der Verteilung des Inhalts unterbrochen wurde, wobei der entfernte Server an den Empfänger eine Liste überträgt, die eine Folge von Datenpaketen identifiziert, darunter jene des Anfangs des unterbrochenen Segments.

5. Verfahren zur Wiederaufnahme von Audioinhalt nach Anspruch 6, **dadurch gekennzeichnet, dass** der Schritt des Bestimmens des Anfangsmoments des Segments, dessen Wiedergabe durch das erste Ereignis unterbrochen wurde, auf der Ebene des entfernten Servers erfolgt.

6. Verfahren zur Wiederaufnahme von Audioinhalt nach Anspruch 6, **dadurch gekennzeichnet, dass** der Schritt des Bestimmens des Anfangsmoments des Segments, dessen Wiedergabe durch das erste Ereignis unterbrochen wurde, auf der Ebene des Empfängers erfolgt, der diesen Moment an den entfernten Server überträgt.

7. Verfahren zur Wiederaufnahme von Audioinhalt nach einem der Ansprüche 4 bis 6, **dadurch gekennzeichnet, dass** die Detektion eines zweiten externen Ereignisses einen Schritt auslöst, der dem Benutzer vorschlägt, zwischen einer Wiederaufnahme des Inhalts im genauen Unterbrechungsmoment während der Verteilung des Inhalts oder am Anfang des Segments, dessen Wiedergabe unterbrochen wurde, zu wählen.

8. Verfahren zur Wiederaufnahme von Audioinhalt nach einem der vorhergehenden Ansprüche, **dadurch gekennzeichnet, dass** es einen Schritt des Bestimmens der aktuellen Zeit im Moment der Übertragung, durch den Empfänger an den entfernten Server, des das erste Ereignis datierenden Moments und einen Schritt des Berechnens des zeitlichen Abstands zwischen der genannten empfangenen aktuellen Zeit und der aktuellen Zeit des Servers umfasst, wobei die Datenpakete des Inhalts im Unterbrechungsmoment durch die übertragene Zeit datiert werden, zu der der berechnete Abstand festgelegt wird.

9. Verfahren zur Wiederaufnahme von Audioinhalt nach einem der vorhergehenden Ansprüche, **dadurch gekennzeichnet, dass** es einen Schritt des Modifizierens der Benutzerschnittstelle während einer begrenzten Dauer umfasst, der spezifiziert, dass der Unterbrechungsdienst der Wiedergabe des Inhalts und der Wiederaufnahme zur versetzten Übertragung während dieser begrenzten Dauer nicht verfügbar ist.

10. Verfahren zur Wiederaufnahme von Audioinhalt nach einem der vorhergehenden Ansprüche, **dadurch gekennzeichnet, dass** der dann zeitversetzt wiederaufgenommene unterbrochene Audioinhalt auf der Ebene des Hybridempfängers in einem Format gemäß einem der Standards der folgenden Aufstellung empfangen wird: MPEG, HLS oder DASH.

11. Verfahren zur Wiederaufnahme von Audioinhalt nach einem der vorhergehenden Ansprüche, **dadurch gekennzeichnet, dass** der Audioinhalt auf der Ebene des Servers aus einem ringverwalteten Speicher gelesen wird.

12. Hybridrezeptor zur Wiedergabe von Audioinhalt, welcher von einem bestimmten Fluss stammt, der auf einem ersten Netz verteilt wird, wobei der genannte Empfänger ein Mittel (4) zum Empfangen des bestimmten Flusses, der auf dem genannten ersten Netz verteilt wird, ein Mittel (5) zum Kommunizieren mit einem entfernten Server und ein Mittel (8, 9) zum Wiedergeben dieses Audioinhalts zur versetzten Wiedergabe umfasst, wobei der genannte Empfänger **dadurch gekennzeichnet ist, dass** er außerdem umfasst:
- ein erstes Mittel zum Detektieren eines ersten Ereignisses extern von dem Empfänger, das die Unterbrechung der Wiedergabe des Inhalts während der Aufzeichnung mindestens des Unterbrechungsmoments auslöst, der von einer internen Uhr geliefert wird,
- ein zweites Mittel zum Detektieren eines zweiten externen Ereignisses zur Wiederaufnehme des Empfangs des genannten Inhalts, das die Übertragung an einen entfernten Server zur Verwaltung des Diensts der Wiederaufnahme des Inhalts, des Moments, der das erste Ereignis datiert, und einer Anforderung zum Empfangen der Datenpakete des Inhalts, der ab dem genannten Moment verteilt wird, auslöst, wobei das Mittel (5) zum Kommunizieren von dem genannten entfernten Server eine Information empfängt, welche eine Liste umfasst, die eine Folge von Datenpaketen identifiziert, darunter jene des Audioinhalts, die zwischen dem Unterbrechungsmoment und dem aktuellen Moment verteilt werden, wobei die so identifizierten Datenpakete dazu bestimmt sind, mit einer Zeitversetzung empfangen und wiedergegeben zu werden.

13. System zur Wiedergabe eines Audioinhalts, umfassend einen Hybridempfänger, versehen mit einem Mittel zum Empfangen des genannten Audioinhalts, welcher der von einem bestimmten Fluss stammt, der über ein Netz verteilt wird, und mit einem Mittel zur Wiedergabe dieses Audioinhalts zur zeitversetzten Wiedergabe,
**dadurch gekennzeichnet, dass** es ein erstes Mittel zum Detektieren eines ersten Ereignisses extern von dem Empfänger, das die Unterbrechung der Wiedergabe des laufenden Inhalts und die Aufzeichnung des Unterbrechungsmoments auslöst, und ein zweites Mittel zum Detektieren eines zweiten externen Ereignisses, das die Übertragung von dem Empfänger an einen Server auslöst, umfasst.

14. Computerprogrammprodukt, umfassend Programmcodeinstruktionen zur Durchführung des Verfahrens nach mindestens einem der Ansprüche 1 bis 10, wobei das genannte Programm auf einem Computer ausgeführt wird.

## Claims

1. Method of transmission of an interrupted audio content in a hybrid receiver with a view to a time-shifted playback, the method comprising at least the following steps:
- a step of reception of a determined stream broadcast on a network and of playback of the contents transmitted by said stream in the receiver,
- a step of detection of a first event external to the receiver triggering the interruption of the playback of the content in progress and of recording the instant of the interruption,
- a subsequent step of detection of a second external event triggering a step of transmission, from the receiver device to a remote server of management of the content resumption service, of the instant of the interruption and a request for resuming the playback of the interrupted content,
- a step of transmission, from the remote server to the receiver device, of a piece of information specifying the identifiers of the data packets of the content at the instant of the interruption, said information comprising a manifest identifying a succession of data packets, including those of the audio content broadcast between the instant of the interruption and the present instant,
- a step of transmission of the data packets, thus identified, of the content, and of reception by the receiver of said data packets with a view to their time-shifted playback.

2. Method for resuming an audio content according to claim **1, characterized in that** the transmitted manifest identifies all the chunks stored in the server, starting from the instant when the time interval between the instant of interruption and the present instant surpasses the duration of all the chunks stored in the server.

3. Method for resuming an audio content according to claim **1, characterized in that** the information transmitted by the remote server to the receiver comprises a read address in a circular buffer of another remote server, this address corresponding to the first audio frame of the unplayed remaining part of the audio content, the server thereafter transmitting the audio frames of the unplayed remaining part of the content.

4. Method for resuming an audio content according to any one of the preceding claims, **characterized in that** said audio content is divided into a plurality of segments, each presenting a semantic unit, and **in that** the detection of the second event triggers a step of determining the instant of the start of the segment, the playback of which has been interrupted by the first event during the broadcasting of the content, the remote server transmitting, to the receiver, a manifest identifying a succession of data packets including those of the start of the interrupted segment.

5. Method for resuming an audio content according to claim 6, **characterized in that** the step for determining the instant of the start of the segment, the playback of which has been interrupted by the first event, is carried out at the remote server.

6. Method for resuming an audio content according to claim 6, **characterized in that** the step for determining the instant of the start of the segment, the playback of which has been interrupted by the first event, is carried out at the receiver which transmits this instant to the remote server.

7. Method for resuming an audio content according to any one of the claims 4 to 6, **characterized in that** the detection of a second external event triggers a step proposing to the user that he chooses between a playback of the content at the precise instant of the interruption during the broadcasting of the content, or at the start of the segment, the playback of which has been interrupted.

8. Method for resuming an audio content according to any one of the preceding claims, **characterized in that** it comprises a step for determining the current time at the instant of transmission, from the receiver to the remote server, of the instant dating the first event and a step for computing the time offset between said received current time and the current time of the server, the data packets of the content at the instant of the interruption being dated by the time transmitted, from which the computed time offset is deducted.

9. Method for resuming an audio content according to any one of the preceding claims, **characterized in that** it comprises a step for modifying the user interface for a limited duration, specifying that the service for interrupting the playback of the content and for resumption with time-shifted transmission is not available during this limited duration.

10. Method for resuming an audio content according to any one of the preceding claims, **characterized in that** the audio content, interrupted and then resumed with a time shift, is received in the hybrid receiver in a format according to one of the standards from the following list: MPEG, HLS or DASH.

11. Method for resuming an audio content according to any one of the preceding claims, **characterized in that** the audio content is read at the server from a circularly managed memory.

12. Hybrid receiver for the playback of an audio content coming from a determined stream broadcast on a first network, said receiver comprising a means of reception (4) of the determined stream broadcast on said first network, a communications means (5) for communication with a remote server and a means (8, 9) for playing back this audio content with a view to time-shifted playback, said receiver being **characterized in that** it further comprises:
- a first means of detection of a first event external to the receiver triggering the interruption of the playback of the content in progress and the recording of at least the instant of the interruption given by an internal clock,
- a second means of detection of a second external event for the resumption of the reception of said content triggering the transmission, to a remote server of management of the content resumption service, of the instant dating the first event and of a request to receive the data packets of content broadcast from said instant onwards, the communications means (5) receiving; from said remote server, a piece of information comprising a manifest identifying a succession of data packets including those of the audio content broadcast between the instant of the interruption and the present instant, the data packets thus identified being intended for reception and time-shifted playback.

13. System for the playback of an audio content comprising a hybrid receiver provided with a means of reception of said audio content coming from a determined stream broadcast on a network and a means for the playback of this audio content with a view to a time-shifted playback,
**characterized in that** it comprises a first means of detection of a first event external to the receiver triggering the interruption of the playback of the content in progress and the recording of the instant of interruption and a second means of detection of a second external event triggering the transmission, from the receiver to a remote server of management of the content resumption service, of the instant dating the first event and of a request for resuming the playback of the interrupted content, the system comprising a server receiving, from the receiver, a piece of information specifying the identifiers of the data packets of the content at the instant of the interruption and sending the receiver a piece of information comprising a manifest identifying a succession of data packets including those of the audio content broadcast between the instant of the interruption and the present instant, the data packets thus identified being intended for reception and time-shifted playback

14. Computer program product comprising program code instructions for the implementation of the method according to at least one of the claims 1 to 10, when said program is executed on a computer.
